# EUROPEAN PATENT SPECIFICATION

(11) **EP 1 707 785 B1**
(45) Date of publication and mention of the grant of the patent: **24.02.2010**
(21) Application number: 06111203.3
(22) Date of filing: 15.03.2006
(51) Int. Cl.: F02D 41/40, F02D 41/38

(54) **Control apparatus for diesel-type internal combustion engine**
Steuergerät für Dieselmotor
Dispositif de commande pour un moteur à combustion interne du type Diesel

(30) Priority: 28.03.2005 JP 2005092563
(43) Date of publication of application: 04.10.2006
(73) Proprietor: Toyota Jidosha Kabushiki Kaisha, Toyota-shi, Aichi-ken, 471-8571 (JP)
(72) Inventor: ISHIYAMA, Shinobu, Toyota-shi Aichi 471-8571 (JP)
(74) Representative: TBK-Patent

(56) References cited:
- EP-A- 1 243 777
- WO-A-95/21324
- US-A1- 2003 177 762
- US-A1- 2004 099 248
- US-B1- 6 505 601

## Description

### BACKGROUND OF THE INVENTION

### 1. Field of the Invention

This invention relates to a control apparatus according to the preamble of claim 1.

### 2. Description of the Related Art

In a diesel-type internal combustion engine, the smoke composed of particulates is mixed in the exhaust gas discharged from the combustion chamber depending on the combustion conditions in the combustion chamber. In many diesel-type internal combustion engines, therefore, a particulate filter is disposed on the engine exhaust path in order to reduce the smoke released into the atmosphere while, at the same time, the combustion conditions in the combustion chamber are improved to suppress the smoke generation in the combustion chamber.

In the invention described in JP-A-0 8-254152, for example, the timing of fuel injection from the fuel injection valve is retarded and the fuel injection pressure from the fuel injection valve is relatively increased to shorten the injection duration while the engine is running under a low load. As a result, the ignition delay time is lengthened and the fuel is injected during the ignition delay time. Thus, the combustion is mostly premix combustion and the smoke generation can be suppressed.

The diesel-type internal combustion engine poses the problem of combustion noise in addition to the problem of smoke generation. Combustion noise is liable to increase with the simultaneous combustion of a large amount of fuel. In the apparatus described in JP-A-0 8-254152, for example, the self-ignition of the mixture gas after the completion of the fuel injection from the fuel injection valve unavoidably increases the combustion noise.

Combustion noise can be effectively reduced by carrying out the fuel injection in a multi-pilot injection mode in which the fuel is injected a plurality of times before main injection. Specifically, the fuel injection in multi-pilot injection mode causes self-ignition of the mixture gas before or immediately after the main injection. The self-ignition occurs, therefore, while the fuel is not substantially injected as main injection. Thus, the fuel injected into the combustion chamber at the time of self-ignition is small in amount, and therefore a large amount of fuel is not combusted at the same time, thereby reducing the combustion noise.

In multi-pilot injection mode, however, the fuel is injected heavily using a seat choke range of the fuel injection valve. Therefore, the fuel is not sufficiently atomized or the fuel injected from the fuel injection valve (hereinafter referred to as the "injected fuel") is low in the penetrating force and is not dispersed in the combustion chamber but tends to drift in the central portion of the combustion chamber. As a result, the combustion condition of the mixture gas is deteriorated, resulting in an increased amount of smoke.

US 2004/099248 discloses a control apparatus comprising the features according to the preamble of claim 1.

### SUMMARY OF THE INVENTION

Accordingly, it is an object of this invention to provide a control apparatus for a diesel-type internal combustion engine capable of suppressing smoke generation while maintaining the combustion noise at a low level.

According to a first aspect of the invention, there is provided a control apparatus, for a diesel-type internal combustion engine, comprising a fuel injection valve, and a fuel supply means to supply the fuel to the fuel injection valve at a target fuel supply pressure, wherein the fuel injection valve can inject the fuel in a main injection mode, in which the fuel is injected at about the top dead center in compression stroke, a single-pilot injection mode in which the pilot injection is carried out once before the main injection, and a multi-pilot injection mode in which the pilot injection is carried out several times before the main injection, wherein the target fuel supply pressure is set to a reference target fuel supply pressure when the fuel is injected in single-pilot injection mode, and wherein the target fuel supply pressure is set higher than the reference fuel supply pressure when the fuel is injected in multi-pilot injection mode.

In this aspect of the invention, the target fuel supply pressure is set to a high level while the fuel is injected in multi-pilot injection mode. With the increase in fuel supply pressure, the atomization of the injected fuel in the combustion chamber is promoted, and the penetrating force of the injected fuel is increased due to the high fuel supply pressure, with the result that the injected fuel is dispersed over the whole combustion chamber. As a result, the combustion condition of the mixture gas is improved and the smoke generation is suppressed.

According to another aspect of the invention, there is provided a control apparatus for a diesel-type internal combustion engine, wherein the fuel is injected in multi-pilot injection mode while the engine operating condition is in the low/middle load operation area where the engine load is not more than the middle reference load.

Generally, the combustion noise poses a problem in the case where the injected fuel amount is small, i.e. the engine load is comparatively low. According to this aspect, the multi-pilot injection mode is carried out in the case where the engine operating condition is in the low/middle load operation area and, therefore, the combustion noise problem is effectively obviated.

According to still another aspect of the invention, there is provided a control apparatus for a diesel-type internal combustion engine wherein, in the case where the engine operating condition is in the low load operation area where the engine load is not higher than the low reference load lower than the middle reference load, the target fuel supply pressure is increased, from the reference target fuel supply pressure, more than in the case where the engine operating condition is in the middle load operation area where the engine load is not higher than the middle reference load but is higher than the low reference load.

According to yet another aspect of the invention, there is provided a control apparatus for a diesel-type internal combustion engine, wherein the fuel injection valve includes a nozzle body, at least an injection port formed at the forward end of the nozzle body and a needle valve adapted to be lifted in the nozzle body, wherein when the needle valve is lifted, an annular gap is formed between the needle valve and the inner surface of the nozzle body, and wherein the low load operation area is such that the pilot injection and the main injection are carried out by lifting the needle valve to such a degree that the cross sectional area of the annular gap formed by lifting the needle valve is smaller than the total cross sectional area of the injection ports.

Normally, the fuel injection carried out by lifting the needle valve to such a degree that the cross sectional area of the annular fuel path is smaller than the total cross sectional area of the injection port (hereinafter referred to as the "low-lift fuel injection") is limited to the pilot injection. In the case where the engine operating condition is in the low load operation area, however, the main injection is also carried out by low-lift fuel injection. In low-lift fuel injection, the annular fuel path acts as a constriction and, therefore, the pressure between the annular fuel path and the injection port is low, with the result that the injection pressure from the injection port is reduced, thereby leading to insufficient fuel atomization and insufficient dispersion of the injected fuel. According to the aforementioned aspect, the fuel supply pressure is increased and, therefore, the injection pressure from the injection port is also increased while the engine operating condition is in the low-load operation area, thereby promoting the fuel atomization and the dispersion of the injected fuel.

According to a further aspect of the invention, there is provided a control apparatus, for a diesel-type internal combustion engine, further comprising a swirl ratio control means for changing the swirl ratio of the intake gas flowing into the combustion chamber of the diesel-type internal combustion engine, wherein the swirl ratio control means controls the swirl ratio to a larger value, in the case where the engine operating condition is the low-load operation area, than in the case where the engine operating condition is in other than the low-load operation area.

As described above, in the case where the engine operating condition is in the low-load operation area, the injected fuel is dispersed insufficiently. According to this embodiment, however, the dispersion of the injected fuel is promoted, in such a case, by increasing the swirl ratio.

According to a still further aspect of the invention, there is provided a control apparatus for a diesel-type internal combustion engine, wherein two pilot injections are carried out before the main injection in multi-pilot injection mode, and the multi-pilot injection mode includes a near multi-pilot injection mode in which the first pilot injection is carried out at a later time near the second pilot injection and a far multi-pilot injection mode in which the first pilot injection is carried out at an early time far from the second pilot injection, and wherein the fuel is injected in near multi-pilot injection mode in the low-load operation area.

Generally, in a multi-pilot injection mode, the first pilot injection is desirably carried out at a later timing near the second pilot fuel injection. This is because, if the first pilot injection is carried out at an early time, the fuel is not gasified and is attached to the bore due to the insufficient temperature and pressure in the combustion chamber, thereby causing a high fuel cost. In the case where the first pilot injection is carried out at a later time, on the other hand, the fuel supply pressure for the second pilot injection and the main injection is reduced by the first pilot injection, and the injected fuel tends to be atomized insufficiently. To prevent the decrease of fuel supply pressure, the target fuel supply pressure may be increased. With the increase in the target fuel supply pressure, however, the injection rate is increased, resulting in an increased fuel amount injected into the combustion chamber during the ignition delay time, thereby increasing the combustion noise.

In this aspect of the invention, the fuel is injected in a near multi-pilot injection mode in the case where the engine operating condition is in the low-load operation area. As long as the engine operating condition is in the low-load operation area, or especially, in the operation area where the pilot injection and the main injection are carried out by the low-lift fuel injection, the target fuel supply pressure is increased, as described above, and therefore the injected fuel is sufficiently atomized. A further increase in the target fuel supply pressure is not easily accompanied by the increase in injection rate, so that the amount of the fuel injected into the combustion chamber is not substantially increased during the ignition delay time. As a result, the fuel can be effectively injected in a near multi-pilot injection mode without increasing the combustion noise.

According to a still further aspect of the invention, there is provided a control apparatus for a diesel-type internal combustion engine, wherein the fuel is injected in multi-pilot injection mode in the case where the engine operating condition is in the operation area where the load is not higher than a load higher than the middle reference load during the cold state of the internal combustion engine.

When the internal combustion engine is cold, the ignition delay time is longer than when the engine is warm, and combustion noise appears. According to the aforementioned aspect, the area in which the multi-pilot injection mode is carried out during the cold state of the engine is increased and therefore the combustion noise is reduced.

According to yet another aspect of the invention, there is provided a control apparatus for a diesel-type internal combustion engine, wherein each cylinder communicates with two intake ports, and the swirl ratio control means includes an openable and closeable swirl control valve arranged in one of the intake ports and wherein the swirl control valve is opened during the starting operation of the engine.

In the case where the EGR system is provided and the engine operating condition is other than a cold start, the introduction of the high-temperature EGR gas maintains the combustion chamber at a high temperature and therefore the self-ignition of the mixture gas is easily accomplished. During a cold start of the internal combustion engine, on the other hand, the lack of the EGR gas introduced makes the self-ignition of the mixture gas difficult. According to this aspect, the swirl control valve is opened at the time of starting the engine and therefore the amount of air filled in the combustion chamber is increased, with the result that the temperature and pressure in the combustion chamber are increased due to the compression by the piston, thereby facilitating the self-ignition of the mixture gas.

According to this invention, the execution of the fuel injection in multi-pilot injection mode reduces the combustion noise on the one hand, and the fuel supply pressure is increased to suppress the smoke generation on the other hand. As a result, there is provided a control apparatus for a diesel-type internal combustion engine capable of maintaining a low combustion noise while at the same time suppressing the generation of the smoke.

### BRIEF DESCRIPTION OF THE DRAWINGS

The present invention may be more fully understood from the description of the preferred embodiments of the invention set forth below together with the accompanying drawings, in which:
Fig. 1 is a diagram showing an internal combustion engine as a whole in an application of this invention;
Fig. 2 is a sectional view of the forward end portion of the fuel injection valve;
Fig. 3 is a diagram showing the relation between the lift amount of the needle valve and the cross sectional area of the annular gap formed between the needle valve and the inner wall surface of the nozzle body;
Figs. 4a, 4b, 4c are diagrams showing the fuel injection patterns in various injection modes;
Figs. 5a, 5b, 5c are diagrams showing the relation between the various injection modes and the timing of self-ignition of the mixture gas;
Fig. 6 is a diagram showing the various operation areas;
Fig. 7 is a diagram for explaining an ordinary method of setting the rail pressure;
Fig. 8 is a diagram showing the relation between the engine load, and the rail pressure and the swirl ratio;
Fig. 9 is an enlarged top plan view schematically showing the combustion chamber and the intake manifold for one cylinder; and
Fig. 10 is a flowchart showing the control routine in the method of controlling the rail pressure and the SCV opening degree.

### DESCRIPTION OF THE PREFERRED EMBODIMENTS

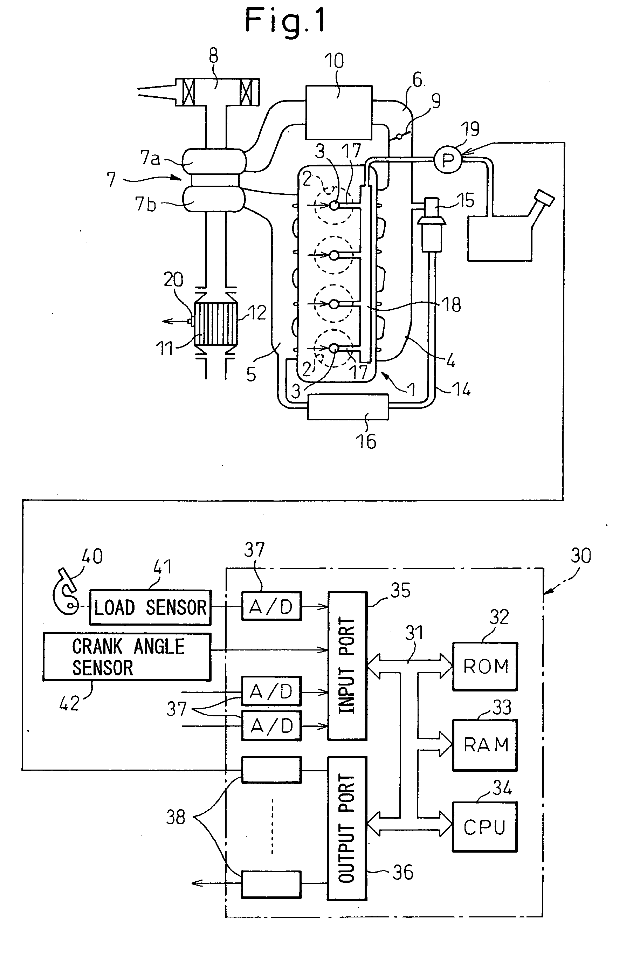

An embodiment of the invention is explained in detail below with reference to the drawings. Fig. 1 shows an application of the control apparatus according to the first embodiment of the invention to the internal combustion engine of compressed self-ignition type.

Referring to Fig. 1, reference numeral 1 designates an engine body, numeral 2 a combustion chamber of each cylinder, numeral 3 an electronically controlled fuel injection valve for injecting the fuel into each combustion chamber 2, numeral 4 an intake manifold and numeral 5 an exhaust manifold. The intake manifold 4 is connected to the outlet of a compressor 7a of an exhaust turbo charger 7 through an intake pipe 6, and the inlet of the compressor 7a is connected to an air cleaner 8. A throttle valve 9 driven by a step motor is arranged in the intake pipe 6, and a cooling unit 10 for cooling the intake air flowing in the intake pipe 6 is arranged around the intake pipe 6. According to the embodiment shown in Fig. 1, the engine coolant is introduced into the cooling unit 10 to cool the intake air. The exhaust manifold 5, on the other hand, is connected to the inlet of the exhaust gas turbine 7b of the exhaust gas turbo charger 7, and the outlet of the exhaust gas turbine 7b is connected to a casing 12 having an exhaust gas purification catalyst 11 therein.

The exhaust manifold 5 and intake manifold 4 are connected to each other through an exhaust gas recirculation (hereinafter referred to as "EGR") path, and an electronically controlled EGR control valve 15 is arranged in the EGR path 14. Also, an EGR cooling unit 16 for cooling the EGR gas flowing in the EGR path 14 is arranged around the EGR path 14. According to the embodiment shown in Fig. 1, the engine coolant is introduced into the cooling unit 16 to cool the EGR gas. On the other hand, each fuel injection valve 3 is connected to a fuel reservoir, or a common rail 18, through the fuel supply pipe 17. The fuel is supplied into the common rail 18 by an electronically controlled fuel pump 19 of variable discharge rate, and the fuel supplied into the common rail 18 is supplied further to the fuel injection valve 3 through each fuel supply pipe 17. In the following description, the air containing the EGR gas is also referred to simply as the air.

The electronic control unit 30 is configured of a digital computer and includes, interconnected by a bidirectional bus 31, a ROM (read-only memory) 32, a RAM (random access memory) 33, a CPU (microprocessor) 34, an input port 35 and an output port 36. The exhaust gas purification catalyst 11 has mounted thereon a temperature sensor 20 for detecting the temperature of the exhaust gas purification catalyst 11, and the output signal of the temperature sensor 20 is input to the input port 35 through a corresponding A/D converter 37. Also, an acceleration pedal 40 is connected with a load sensor 41 for generating an output voltage proportional to the angle of the acceleration pedal 40, and the output voltage of the load sensor 41 is input to the input port 35 through the corresponding A/D converter 37. Further, the input port 35 is connected with a crank angle sensor 42 for generating an output pulse for each angle of, say, 15° of rotation of the crank shaft, and the engine speed is detected by the crank angle sensor 42. The output port 36, on the other hand, is connected through a corresponding drive circuit 38 to the fuel injection valve 3, the step motor for driving the throttle valve 9, the EGR control valve 15 and the fuel pump 19.

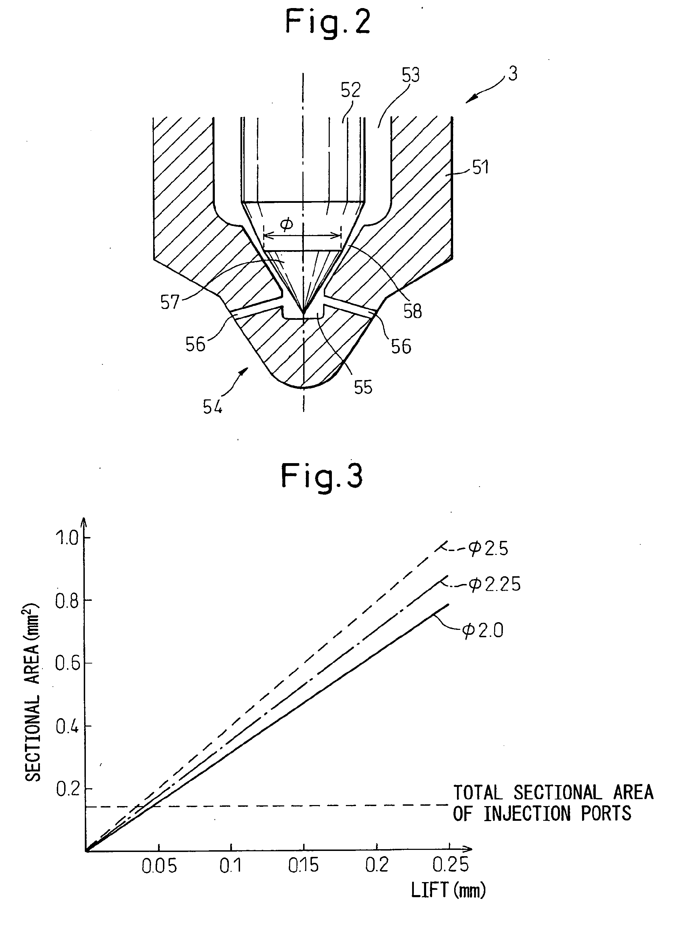

Fig. 2 is a sectional view showing the forward end portion of the fuel injection valve 3. As shown in Fig. 2, the fuel injection valve 3 includes a substantially hollow and cylindrical nozzle body 51 having a internal space and a substantially solid and cylindrical needle valve 52 adapted to slide (move) in the internal space of the nozzle body 51. The nozzle body 51 and the needle valve 52 are disposed so that the axes of them are aligned. An annular path 53 in which the fuel flows is defined between the inner wall surface of the nozzle body 51 and the needle valve 52, and is connected to the common rail 18 from which the fuel is supplied to the annular path 53. The forward end portion 54 of the nozzle body 51 is substantially conical, and is formed with a sac portion 55 and a plurality of injection ports 56 through the nozzle body 51. These injection ports 56 are in fluid communication with the annular path 53.

The needle valve 52 is slidable in the internal space of the nozzle body 51, whereby the fuel injection from the fuel injection valve 3 is controlled. Specifically, once the forward end portion 57 of the needle valve 52 comes into contact with the inner wall surface of the nozzle body 51, the annular path 53 is cut off and the fuel ceases to flow to the injection ports 56 and, therefore, no fuel is injected from the injection ports 56. In the case where the needle valve 52 is lifted and the forward end portion 57 of the needle valve 52 comes away from the inner wall surface of the nozzle body 51, on the other hand, the annular gap 58 is formed between the needle valve 52 and the inner wall surface of the nozzle body 51, and the fuel flows through the annular gap 58, so that the fuel is injected from the injection ports 56. Thus, the fuel is not injected when the lift amount of the needle valve 52 is zero and injected when the needle valve 52 is lifted.

Fig. 3 is a diagram showing the relation between the lift amount of the needle valve 52 and the cross sectional area of the annular gap 58. In Fig. 3, the three straight lines indicate the relation between the lift amount and the sectional area for different seat diameters φ (Fig. 2), the solid line representing the seat diameter φ of 2.0 mm, the one-dot chain the seat diameter φ of 2.25 mm, and the dashed line the seat diameter φ of 2.5 mm. As can be understood from Fig. 3, the sectional area of the annular gap 58 increases in proportion to the lift amount.

The total sectional area of the plurality of the injection ports 56 is about 0.149 mm², for example, in the case where nine injection ports of 0.145 mm in diameter are arranged at the forward end portion of the nozzle body 51. It is understood from Fig. 3, therefore, that in the case where the seat diameter φ is 2.0 mm, for example, the sectional area of the annular gap 58 remains smaller than the total sectional area of the injection ports until the lift amount of the needle valve 52 reaches 0.05 mm. In this way, as long as the lift amount remains in a range (hereinafter referred to as the "seat choke range") where the sectional area of the annular gap 58 is smaller than the total sectional area of the injection ports, the annular gap 58, instead of the injection ports 56, acts as a constriction for the fuel flowing into the annular path 53 and injected from the injection ports 56. In the description that follows, the fuel injection carried out with the lift amount in the seat choke range is referred to as the "low-lift fuel injection".

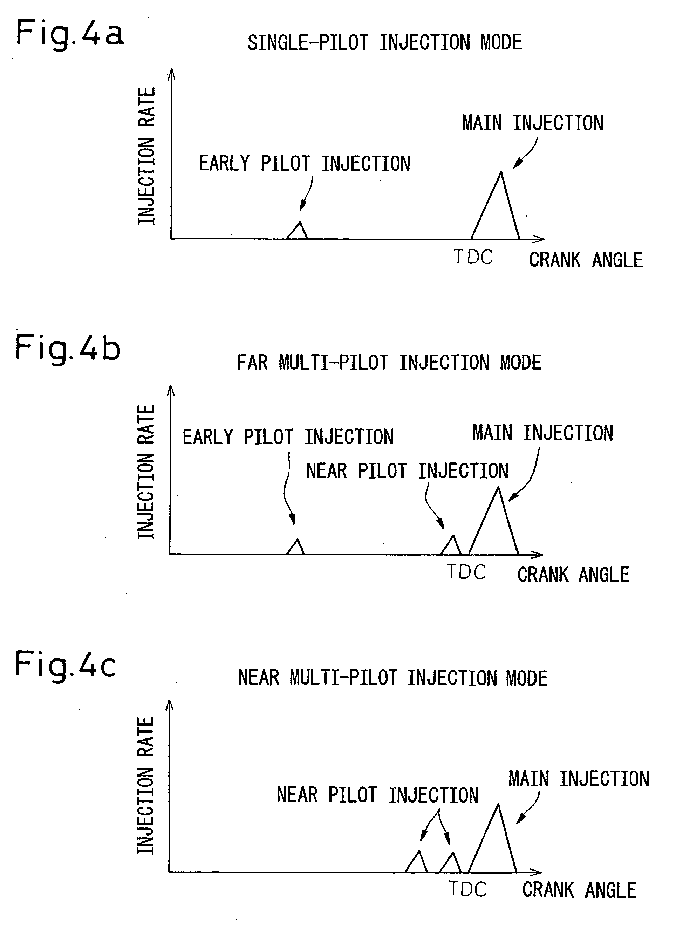

According to this embodiment, the fuel is injected from the fuel injection valve 3 in a plurality of injection modes. In these injection modes, the pilot injection is carried out before and in addition to the main injection carried out at about the top dead center in the compression stroke. With reference to Figs. 4a to 4c, the injection modes used in this embodiment are explained. Figs. 4a to 4c show three injection modes according to this embodiment.

Fig. 4a shows a fuel injection pattern for the single-pilot injection mode. As understood from Fig. 4a, one pilot injection is carried out before the main injection in the single-pilot injection mode. Especially, according to this embodiment, the pilot injection is carried out much earlier than the main injection (for example, 20 degrees in crank angle (20° CA) earlier than the main injection start) (such a pilot injection is hereinafter referred to as the "early pilot injection").

Figs. 4b, 4c show the fuel injection patterns in multi-pilot injection mode. In multi-pilot injection mode, as understood from Figs. 4b, 4c, a plurality of (twice in the shown embodiment) pilot injections are carried out before the main injection. Especially, in this embodiment, two injection modes can be used as a multi-pilot injection mode, i.e. a far multi-pilot injection mode (see Fig. 4b) in which at least one of a plurality of pilot injections is an early pilot injection and the remaining pilot injections are carried out immediately before the main injection (for example, within 20° CA from the start of the main injection) (hereinafter referred to as the "near pilot injection") and a near multi-pilot injection mode (see Fig. 4c) in which all of the plurality of pilot injections are the near pilot injections.

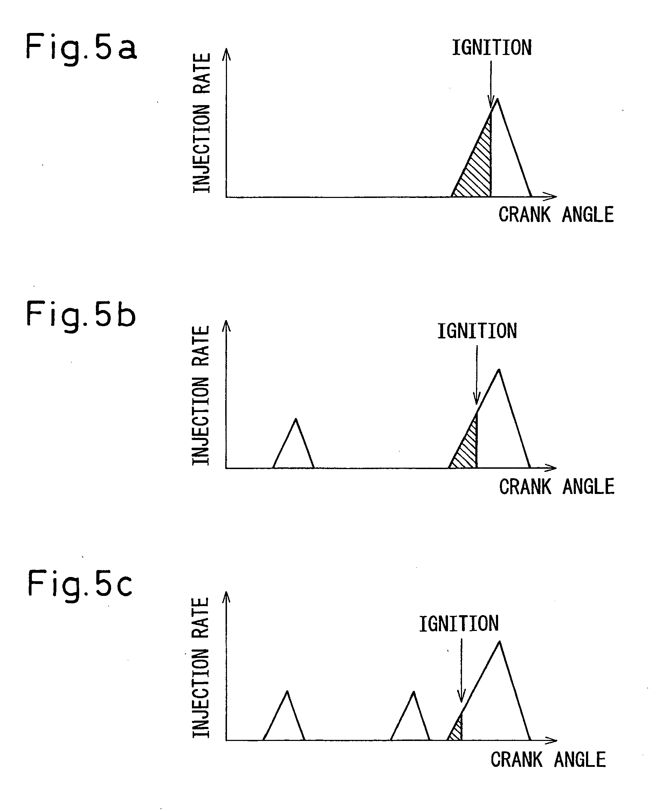

Figs. 5a to 5c show the relation between the various injection modes and the timing of self-ignition of the mixture gas. Fig. 5a shows a case in which the fuel injection is carried out in the injection mode (hereinafter referred to as the "single injection mode") in which the main injection alone, but no pilot injection, is carried out. In this case, the temperature and pressure of the air in the combustion chamber 2 are not very high at the start of the main injection and thus the ignition is delayed, thereby taking considerable time from the start of main injection to the self-ignition of the mixture gas. Even during this ignition delay time, the fuel is injected and therefore a great amount of the fuel has been injected into the combustion chamber 2 by the time of self-ignition of the mixture gas (corresponding to the hatched portion in Fig. 5a). As a result, a great amount of the fuel that has already been injected into the combustion chamber 2 is combusted almost simultaneously at the time of self-ignition of the mixture gas, resulting in a large combustion noise.

Fig. 5b shows a case in which the fuel injection is carried out in single-pilot injection mode. In single-pilot injection mode, the early pilot injection increases the temperature and pressure in the combustion chamber 2. Therefore, the temperature and pressure in the combustion chamber 2 are higher than in the single injection mode at the time of starting the main injection and the ignition delay time is shortened. As a result, a smaller amount of fuel is injected during the ignition delay time, and therefore the amount of fuel injected into the combustion chamber 2 by the time of self-ignition of the mixture gas is small. The combustion noise, therefore, is lower than in the single injection mode.

Fig. 5c shows a case in which the fuel injection is carried out in multi-pilot injection mode. In multi-pilot injection mode, the near pilot injection is carried out, and therefore, the injected fuel by the near pilot injection has reacted or self-ignited by the time of start of the main injection. Specifically, in the multi-pilot injection mode, the self-ignition of the mixture gas occurs immediately before or immediately after the start of main injection. As a result, the injected fuel by the main injection is not combusted at the same time, and therefore the combustion noise is very small.

In recent years, demand for a higher output of the diesel-type internal combustion engine has increased, and to satisfy such demand, the compression ratio has been reduced for many diesel-type internal combustion engines. Specifically, the maximum value of the internal pressure of the combustion chamber 2 is automatically determined by the strength requirement of the engine body 1. To increase the margin of pressure increase of the mixture gas due to the combustion in the combustion chamber 2, therefore, the pressure in the combustion chamber 2 before combustion, i.e. the pressure in the combustion chamber 2 at a motoring of the internal combustion engine is required to be low. For this reason, the compression ratio is set to a low value.

In the case where the compression ratio is low and the internal pressure of the combustion chamber 2 during motoring is reduced in this manner, however, the temperature and pressure in the combustion chamber 2 are low at the time of start of main injection. Thus, the ignition delay time is lengthened and the combustion noise increased.

This increased combustion noise poses the problem especially in the case where the engine speed and the engine load are low. Specifically, in the case where the engine speed or engine load is high, the mechanical noise represents a higher proportion of the noise of the whole internal combustion engine than the combustion noise. In the case where the combustion noise increases, therefore, the noise from the whole internal combustion engine remains substantially unchanged. In the case where the engine speed and the engine load are low, on the other hand, the combustion noise is larger than the mechanical noise, and therefore, an increased combustion noise increases the noise generated from the internal combustion engine as a whole.

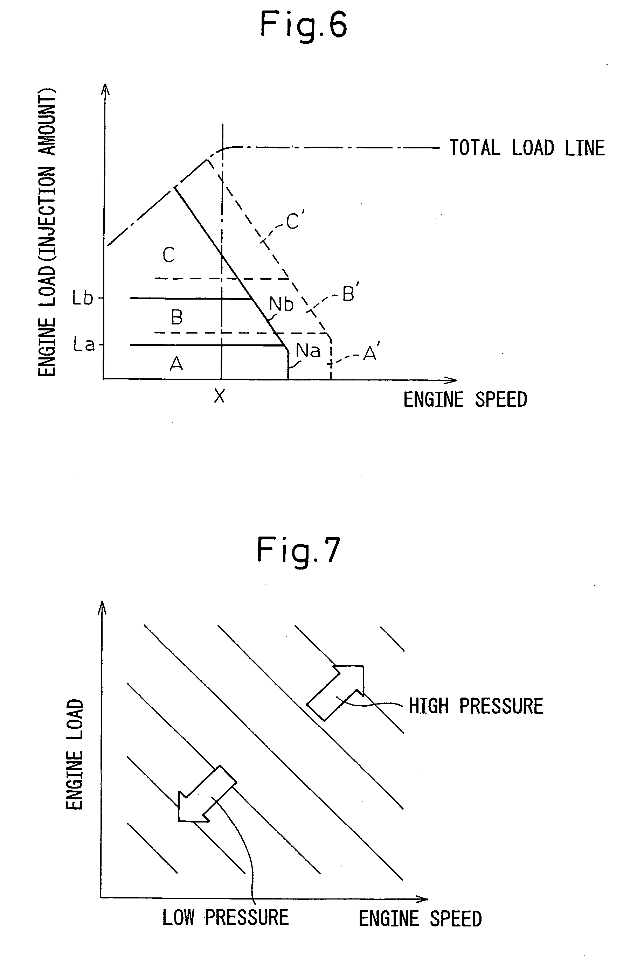

According to this embodiment, the fuel is injected in a multi-pilot injection mode in the case where the engine speed and the engine load are low and the problem of the increased combustion noise is posed. In the case where the engine speed or the engine load is high, on the other hand, the increased combustion noise poses no problem and, therefore, the fuel is injected in a single-pilot injection mode. More specifically, the fuel is injected in a multi-pilot injection mode during the normal operation (the operation other than the cold or starting operation) of the internal combustion engine in the case where the engine operation condition is in the operation areas A and B shown in Fig. 3 in which the increased combustion noise become problematic if the fuel is injected in single-pilot injection mode. In the case where the engine operating condition is not in the operation areas A and B in Fig. 6, on the other hand, the fuel is injected in single-pilot injection mode. The operation areas A and B are where the engine load is smaller than the middle reference load Lb and the engine speed is lower than the middle reference engine speed Nb (a value varied with engine load in this embodiment). As described above, the combustion noise can be reduced by injecting the fuel in multi-pilot injection mode, in a case where the engine operating condition is in an operation area posing a combustion noise problem.

The fuel injection in multi-pilot injection mode generally results in the increase in smoke. Specifically, in multi-pilot injection mode, each pilot injection is a low-lift fuel injection accompanied by a very small injection amount. In the low-lift fuel injection, the annular gap 58 instead of the injection ports 56 acts as a constriction against the fuel flowing into the annular path 53 and injected from the injection ports as described above, and therefore the fuel pressure in the sac portion 56 decreases so that the fuel injected from the injection ports 56 is insufficiently atomized. Insufficient fuel atomization deteriorates the combustion condition in the combustion chamber 2, thereby generating smoke.

According to the embodiment of the invention, therefore, in the case where the fuel is injected in multi-pilot injection mode, a rail pressure higher than the target fuel pressure value in the common rail 18 (hereinafter referred to as the "reference rail pressure") set on the assumption that the fuel is injected in single-pilot injection mode is set as a target rail pressure.

More specifically, the target value of the pressure of the fuel supplied from the common rail 18 to the fuel injection valve 3, i.e. the target rail pressure, as shown in Fig. 7, is generally higher, as the engine load or the engine speed becomes higher. Specifically, in the case where the engine load is high, more air is taken into the combustion chamber 2, the pressure in the combustion chamber 2 at the time of fuel injection become high and a great amount of fuel is required to be injected. Therefore, the injection pressure of the fuel injection valve 3 is required to be high. Also, the high engine speed means a short injection time, and therefore the amount of fuel injected per unit time (hereinafter referred to as he "injection flow rate") is required to be increased. Thus, the injection pressure of the fuel injection valve 3 is required to be high. In this way, the target rail pressure is generally set based on the engine load and the engine speed. In the case where the fuel is injected only in single-pilot injection mode, therefore, the target rail pressure is set based on the map as shown in Fig. 7.

In the case where the fuel can be injected in both single-pilot injection mode and multi-pilot injection mode as in this embodiment, however, smoke is increased if the target rail pressure is set only based on the map shown in Fig. 7 as described above. According to this embodiment, therefore, in the case where the fuel is injected in multi-pilot injection mode, the target rail pressure is controlled so as to be a pressure calculated by adding a predetermined value to the pressure calculated based on the map shown in Fig. 7.

As described above, by the target rail pressure being set high, in the case where the fuel is injected in multi-pilot injection mode, even if the annular gap 58 acts as a constriction at the time of each pilot injection as described above, the fuel pressure in the sac portion 56 is increased and the fuel in the sac portion 56 is greatly disturbed, thereby facilitating the atomization of the fuel injected from the injection ports 56. As a result, the deterioration of the combustion condition in the combustion chamber 2 is suppressed and thus the smoke generation suppressed.

Further, according to this embodiment, in the case where all the fuel injections including the pilot injection and the main injection are conducted only by the low-lift fuel injection, the rail pressure is further increased.

Specifically, in the case where the engine load is decreased and the total amount of fuel to be injected into the combustion chamber 2 of each cylinder in each cycle (hereinafter simply referred to as the "total fuel injection amount") is reduced, if the fuel is injected in multi-pilot injection mode, each fuel injection including both the pilot injection and the main injection is carried out by the low-lift fuel injection. In this case, therefore, the performance of atomization of the injected fuel at the time of low-lift fuel injection is required to be still higher. Also, according to this embodiment, in multi-pilot injection mode, the near pilot injection and the main injection are carried out at very short time intervals. During the main injection, therefore, the rail pressure is somewhat reduced by the effect of the near pilot injection, and therefore the atomization is liable to be insufficient at the time of main injection.

In order to solve this problem, according to this embodiment, in the particular one area in which the engine load is small, i.e. the area (operation area A) where the total fuel injection amount is small, of the operation areas A and B in which the fuel is injected in multi-pilot injection mode, the target rail pressure is increased from the reference rail pressure by a wider margin than in the operation area B. As a result, even in the case where all the fuel injection to the combustion chamber 2 of each cylinder in each cycle is carried out by low-lift fuel injection, the injected fuel can be atomized. It is noted that the operation area A is where the engine load is smaller than the low reference load La and the engine speed is lower than the middle reference engine speed Na.

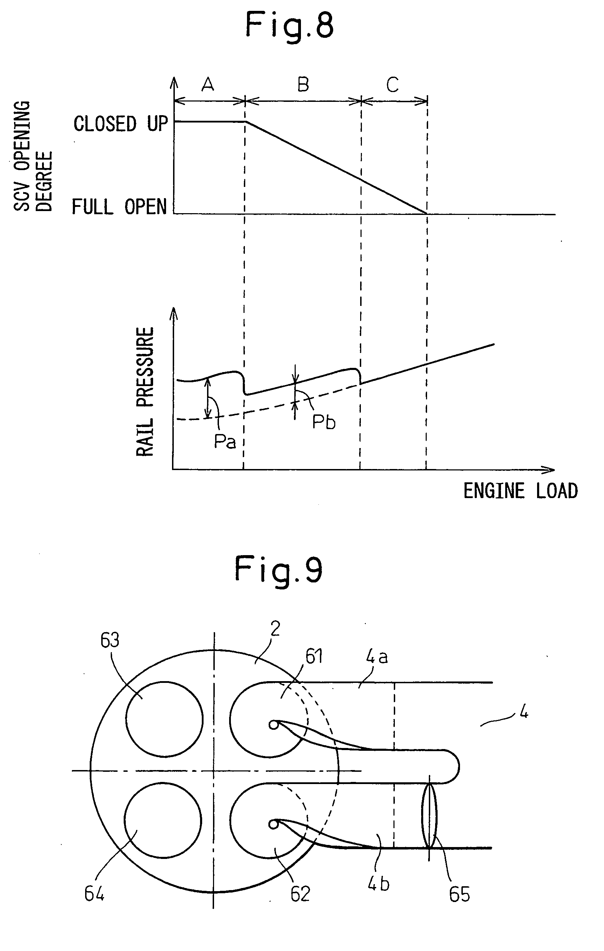

The lower part of Fig. 8 shows the relation between the engine load and the target rail pressure in the case where the engine speed is X in Fig. 6. As shown in Fig. 8, in the case where the engine operating condition is not in the operation areas A and B, the target rail pressure is increased with the engine load. In the case where the engine operating condition is in the operation area B, i.e. in the case where the fuel is injected in multi-pilot injection mode, on the other hand, the target rail pressure is increased by a predetermined pressure Pb from the reference rail pressure (dashed line). Further, in the case where the engine operating condition is in the operation area A, i.e. in the case where all the fuel injection is carried out by low-lift fuel injection, the target rail pressure is increased from the reference rail pressure by a predetermined pressure Pa higher than the predetermined pressure Pb. It is to be noted that, in Fig. 8, the target rail pressure is suddenly changed between the operation areas A and B and between the operation areas B and C. Nevertheless, the target rail pressure may alternatively be gradually changed over some range of the engine load.

Fig. 9 is an enlarged top plan view schematically showing the combustion chamber 2 and the intake manifold 4 of a single cylinder. As shown in Fig. 9, the combustion chamber 2 includes two intake openings 61, 62 and two exhaust openings 63, 64. Also, the intake manifold 4 communicating with the combustion chamber 2 of each cylinder is divided into two branch pipes 4a, 4b communicating with the intake openings 61, 62, respectively.

The branch pipe 4b has a swirl control valve (hereinafter referred to as "SCV") 65 capable of continuously controlling the flow rate of the air in the branch pipe 4b. Once the SCV 65 is closed, the air is introduced into the combustion chamber 2 only through the branch pipe 4a, and thereby a large swirl is generated in the combustion chamber 2. When the SCV 65 is opened, on the other hand, the air is introduced into the combustion chamber 2 through the two branch pipes 4a, 4b, and therefore a small swirl is generated or substantially no swirl is generated in the combustion chamber 2. The SCV 65 can be adjusted continuously, and therefore the swirl generated in the combustion chamber 2 can also be changed continuously.

Generally, in the case where the engine load is low, a lesser amount of air is introduced into the combustion chamber 2, and thus the air is introduced at a lower velocity, thereby hardly causing the air disturbance in the combustion chamber 2. Also in the case where the engine speed is low, the air similarly flows at a low velocity and therefore the air disturbance in the combustion chamber 2 hardly occurs. In the case where the engine load or the engine speed is low, therefore, the opening degree of the SCV 65 is reduced to generate a large swirl in the combustion chamber 2. According to this embodiment, the opening degree of the SCV 65 is reduced in the operation areas A to C in Fig. 6, while the SCV 65 is full open in the other operation areas.

As described above, in the case where all the injection to the combustion chamber 2 of each cylinder is carried out by low-lift fuel injection, the fuel injected from the fuel injection valve 3 is hard to atomize. According to this embodiment, therefore, in the case where all the injection to the combustion chamber 2 of each cylinder is carried out by low-lift fuel injection, not only the target rail pressure is increased but also the SCV 65 is closed up to improve the swirl ratio. As a result, the atomization of the fuel is promoted.

The upper part of Fig. 8 shows the relation between the engine load and the opening degree of the SCV 65. As understood from this, the SCV 65 is fully opened when the engine operating condition is not in the operation areas A to C, while the SCV 65 is closed up in the operation area A.

Further, according to this embodiment, in the case where all the injection to the combustion chamber 2 of each cylinder is carried out by low-lift fuel injection, the fuel is injected in near multi-pilot injection mode, and in the other area of fuel injection in multi-pilot injection mode, the fuel is injected in far multi-pilot injection mode. Next, the reason why the fuel is injected in near multi-pilot injection mode only in the case where all the injection to the combustion chamber 2 of each cylinder is effected by low-lift fuel injection is described.

Generally, the early pilot injection makes it harder to gasify the fuel due to the insufficient temperature and pressure in the combustion chamber 2 at the time of pilot injection. Thus, part of the injected fuel is attached to the cylinder bore (bore flashing) defining the combustion chamber 2. In view of this, the near pilot injection is preferable to the early pilot injection. As long as the engine operating condition is in other than the operation area A, however, it is difficult to inject the fuel in near multi-pilot injection mode.

Specifically, the injection timing of the two near pilot injections carried out in near multi-pilot injection mode are in proximity to the injection timing of the main injection, and therefore the rail pressure is reduced at the time of main injection, thereby leading to insufficient atomization of the injected fuel. In the case where the fuel is injected in near multi-pilot injection mode, therefore, the target rail pressure is required to be set at a high level.

In the case where the engine operating condition is in other than the operation area A, however, an increased target rail pressure increases the injection rate from the fuel injection valve 3, which in turn increases the amount of fuel injected into the combustion chamber 2 during the ignition delay time, thereby causing an increased noise.

In the case where the engine operating condition is in the operation area A, on the other hand, an increased target rail pressure promotes the atomization of the injected fuel while the injection rate of the fuel injection valve 3 is not increased substantially. Specifically, with the increase in target rail pressure, the fuel pressure in the annular path 53 of the fuel injection valve 3 increases, while the fuel pressure in the sac portion 55 is not increased as much as the rail pressure due to the annular gap 58 acting as a constriction. The increased rail pressure, however, disturbs the fuel flow in the sac portion 55 to an increased degree and, therefore, the fuel injected from the fuel injection valve 3 is sufficiently atomized. According to this embodiment, therefore, the fuel is injected in near multi-pilot injection mode only in the case where the engine operating condition is in the operation area A, and in far multi-pilot injection mode in other area (i.e. the operation area B) than the operation area A.

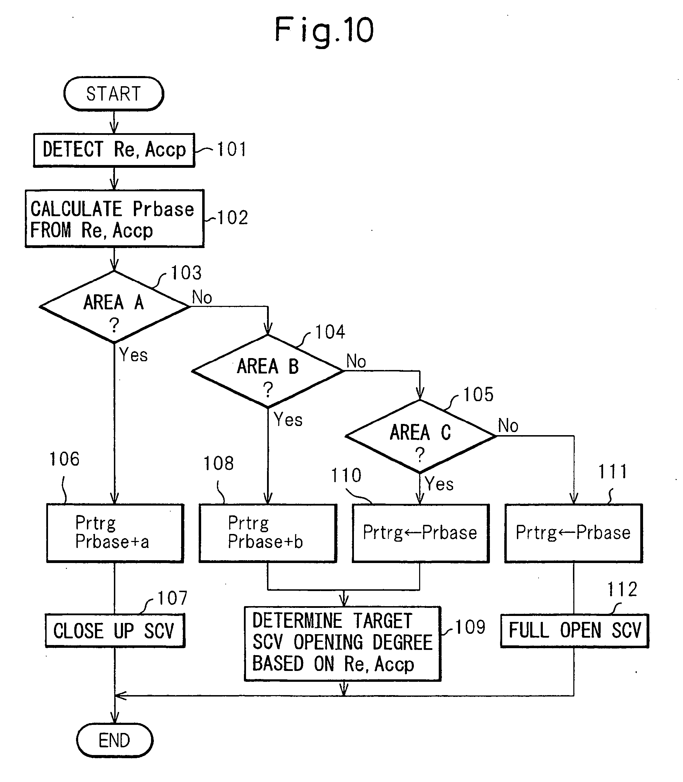

Fig. 10 is a flowchart showing the control routine in the method of controlling the target rail pressure and the SCV opening degree by the control apparatus for the internal combustion engine according to the invention. The shown control routine is executed by interruption at regular time intervals.

First, at step 101, the engine speed Re is detected based on the output of the crank angle sensor 42, and the engine load Accp is detected based on the output of the load sensor 41. Next, at step 102, a reference rail pressure Prbase is calculated based on the map shown in Fig. 7 from the engine speed Re and the engine load Accp detected at step 101. This map is acquired by experiments or calculations in advance and stored in the ROM 32 of the ECU 30.

Next, at steps 103 to 105, a particular part of the operation areas shown in Fig. 6 associated with the current engine operating condition is determined from the engine speed Re and the engine load Accp detected at step 101. In the case where the current engine operating condition is determined as associated with the operation area A at steps 103 to 105, the process proceeds to step 106. At step 106, a target rail pressure Prtrg is set to the reference rail pressure Prbase plus a predetermined value a. Next, at step 107, the SCV 65 is closed up, and then the control routine is terminated. As a result, the fuel pump 19 is driven in such a manner that the fuel pressure in the common rail 18 is set to the target rail pressure Prtrg.

In the case where the current engine operating condition is determined as associated with the operation area B at steps 103 to 105, on the other hand, the process proceeds to step 108. At step 108, the target rail pressure Prtrg is set to the reference rail pressure Prbase plus a predetermined value b. Then, at step 109, the opening degree of the SCV 65 is determined based on the map from the engine speed Re and the engine load Accp. This map is prepared in advance by experiment or calculation and stored in the ROM 32 of the ECU 30. According to this map, the target SCV opening degree is decreased with a decrease in the engine speed Re and the engine load Accp.

In the case where the current engine operating condition is determined as associated with the operation area C at steps 103 to 105, on the other hand, the process proceeds to step 110. At step 110, the target rail pressure Prtrg is set to the reference rail pressure Prbase, followed by proceeding to step 109. Further, in the case where the current engine operating condition is determined as associated with none of the operation areas A to C at steps 103 to 105, the process proceeds to step 111. At step 111, the target rail pressure Prtrg is set to the reference rail pressure Prbase, followed by step 112 at which the SCV 65 is opened full.

The temperature in the combustion chamber 2 is lower during the cold state than during the warm state of the internal combustion engine. During the cold state, therefore, the ignition delay time is lengthened for all the operation areas of the internal combustion engine. At the same time, the combustion noise is increased for all the operation areas of the internal combustion engine. As a result, even in the operation area where fuel is injected in single-pilot injection mode because a combustion noise problem is not posed during the warm state, there are the operation areas where the combustion noise problem is posed during the cold state.

In view of this, according to this embodiment, the area for fuel injection in multi-pilot injection mode is set wider during the cold state than during the warm state of the internal combustion engine. Specifically, as indicated by dashed line in Fig. 6, the operation areas A and B for injecting the fuel in multi-pilot injection mode during the warm state are enlarged to the operation areas A' and B' (area defined by dashed line) during the cold state. As can be understood from Fig. 6, the operation areas A' and B' include the operation areas associated with a higher engine speed and a larger engine load than in the operation areas A and B.

Accordingly, in this embodiment, the operation area A for injecting the fuel in near multi-pilot injection mode during the warm state is enlarged to the operation area A' during the cold state. It is understood from Fig. 6 that the operation area A' includes the area associated with a higher engine speed and a larger engine load than in the operation area A. In similar fashion, the operation area C where the SCV 65 is opened during the warm state is enlarged to the operation area C' during the cold state.

As described above, according to this embodiment, the area for fuel injection in multi-pilot injection mode is set larger during the cold state than during the warm state, thereby suppressing the increase in combustion noise which otherwise might be caused by a lengthened ignition delay time.

In the internal combustion engine having the EGR mechanism according to this embodiment, a high-temperature EGR gas is introduced into the combustion chamber 2 through the EGR path 14 during the engine operation other than the cold state. As a result, the intake gas (air and EGR gas) introduced into the combustion chamber 2 is already increased to a high temperature by the time point when it is introduced into the combustion chamber 2. This facilitates the gasification and hence the self-ignition of the fuel injected into the combustion chamber 2.

The EGR gas introduced into the combustion chamber 2 through the EGR path 14 during the cold starting operation, however, is not increased in temperature, and therefore the intake gas introduced into the combustion chamber 2 is low in temperature. This makes it difficult to gasify the fuel injected into the combustion chamber 2, and self-ignition is difficult, thereby causing a large combustion noise.

According to this embodiment, the SCV 65 is opened fully regardless of the operation area with which the engine operating condition is associated during the cold starting operation. By doing so, the intake resistance of the SCV 65 is reduced and a large amount of intake gas is introduced into the combustion chamber 2. Once a large amount of air is introduced into the combustion chamber 2, the pressure and temperature of the intake gas in the combustion chamber 2 have reached a high level by the time when the piston reaches the top dead center in compression stroke. As a result, the fuel injected from the fuel injection valve 3 is easily gasified and the increased combustion noise is suppressed.

While the invention has been described by reference to specific embodiments chosen for purposes of illustration, it should be apparent that numerous modifications could be made thereto by those skilled in the art without departing from the basic concept and scope of the invention as defined by the claims.

### REFERENCE NUMERALS

- 1: Engine body
- 2: Combustion chamber
- 3: Fuel injection valve
- 4: Intake manifold
- 5: Exhaust manifold
- 18: Common rail
- 19: Fuel pump
- 30: ECU
- 40: Acceleration pedal

## Claims

1. A control apparatus for a diesel-type internal combustion engine comprising a fuel injection valve and a fuel supply means for supplying the fuel to the fuel injection valve under a target fuel supply pressure,
wherein the fuel injection valve is adapted to inject the fuel in a single-pilot injection mode including the main injection at about the top dead center in compression stroke and one pilot injection carried out before the main injection, and in a multi-pilot injection mode including the main injection and a plurality of pilot injections are carried out before the main injection,
wherein the target fuel supply pressure is set to a reference target fuel supply pressure when the fuel is injected in single-pilot injection mode,
**characterized in that**
the target fuel supply pressure is set higher than the reference fuel supply pressure when the fuel is injected in multi-pilot injection mode.

2. A control apparatus for a diesel-type internal combustion engine according to claim 1,
wherein the fuel is injected in multi-pilot injection mode in the case where the engine operating condition is in a low/middle load operation area where the engine load is not more than a middle reference load.

3. A control apparatus for a diesel-type internal combustion engine according to claim 2,
wherein, in the case where the engine operating condition is in the low load operation area where the engine load is not higher than the low reference load lower than the middle reference load, the target fuel supply pressure is increased from the reference target fuel supply pressure by a greater margin than in the case where the engine operating condition is in the middle load operation area where the engine load is not higher than the middle reference load and higher than the low reference load.

4. A control apparatus for a diesel-type internal combustion engine according to claim 3,
wherein the fuel injection valve includes a nozzle body, at least an injection port formed at the forward end of the nozzle body and a needle valve adapted to be lifted in the nozzle body, and when the needle valve is lifted, an annular gap is formed between the needle valve and the inner surface of the nozzle body, and
wherein the low load operation area corresponds to the operation area in which the pilot injection and the main injection are carried out by lifting the needle valve to such a degree that the cross sectional area of the annular gap formed by lifting the needle valve is smaller than the total cross sectional area of the injection ports.

5. A control apparatus for a diesel-type internal combustion engine according to claim 3 or 4, further comprising a swirl ratio control means for changing the swirl ratio of the intake gas flowing into the combustion chamber of the diesel-type internal combustion engine,
wherein the swirl ratio control means controls the swirl ratio to a larger value in the case where the engine operating condition is in the low-load operation area than in the case where the engine operating condition is in other than the low-load operation area.

6. A control apparatus for a diesel-type internal combustion engine according to any one of claims 3 to 5,
wherein two pilot injections are carried out before the main injection in the multi-pilot injection mode, and
wherein the multi-pilot injection mode includes a near multi-pilot injection mode in which the first pilot injection is carried out late and near the second pilot injection and a far multi-pilot injection mode in which the first pilot injection is carried out early and far from the second pilot injection, and
wherein the fuel is injected in near multi-pilot injection mode in the case where the engine operating condition is in the low-load operation area.

7. A control apparatus for a diesel-type internal combustion engine according to any one of claims 2 to 6,
wherein the fuel is injected in multi-pilot injection mode in the case where the engine operating condition is in an operation area where the load is not higher than a load higher than the middle reference load during the cold state of the internal combustion engine.

8. A control apparatus for a diesel-type internal combustion engine according to any one of claims 5 to 7,
wherein each cylinder communicates with two intake ports, and the swirl ratio control means includes an openable and closeable swirl control valve arranged in one of the intake ports, and
wherein the swirl control valve is opened during the starting operation of the engine.

## Patentansprüche

1. Steuergerät für eine Dieselbrennkraftmaschine, mit
einem Kraftstoffeinspritzventil und einer Kraftstoffzuführeinrichtung zum Zuführen des Kraftstoffs zu dem Kraftstoffeinspritzventil unter einem Sollkraftstoffzuführdruck,
wobei das Kraftstoffeinspritzventil angepasst ist, um den Kraftstoff in einer Einzelpiloteinspritzungsbetriebsart einschließlich der Haupteinspritzung an ungefähr dem oberen Totpunkt in einem Verdichtungshub und einer Piloteinspritzung, die vor der Haupteinspritzung ausgeführt ist, und in einer Mehrfachpiloteinspritzungsbetriebsart einschließlich der Haupteinspritzung und einer Vielzahl von Piloteinspritzungen, die vor der Haupteinspritzung ausgeführt werden, einzuspritzen,
wobei der Sollkraftstoffzuführdruck auf einen Referenzsollkraftstoffzuführdruck eingestellt ist, wenn der Kraftstoff in der Einzelpiloteinspritzungsbetriebsart eingespritzt wird,
**dadurch gekennzeichnet, dass**
der Sollkraftstoffzuführdruck höher als der Referenzkraftstoffzuführdruck eingestellt ist, wenn der Kraftstoff in der Mehrfachpiloteinspritzungsbetriebsart eingespritzt wird.

2. Steuergerät für eine Dieselbrennkraftmaschine nach Anspruch 1, wobei der Kraftstoff in der Mehrfachpiloteinspritzungsbetriebsart in dem Fall eingespritzt ist, in dem der Maschinenbetriebszustand in einem unteren/mittleren Lastbetriebsbereich ist, in dem die Maschinenlast nicht mehr als eine mittlere Referenzlast ist.

3. Steuergerät für eine Dieselbrennkraftmaschine nach Anspruch 2, wobei in dem Fall, in dem der Maschinenbetriebszustand in dem unteren Lastbetriebsbereich ist, in dem die Maschinenlast nicht höher als die untere Referenzlast ist, die niedriger als die mittlere Referenzlast ist, der Sollkraftstoffzuführdruck von dem Referenzsollkraftstoffzuführdruck um eine größere Spanne erhöht ist als in dem Fall, in dem der Maschinenbetriebszustand in dem mittleren Lastbetriebsbereich ist, in dem die Maschinenlast nicht höher als die mittlere Referenzlast und höher als die untere Referenzlast ist.

4. Steuergerät für eine Dieselbrennkraftmaschine nach Anspruch 3,
wobei das Kraftstoffeinspritzventil einen Düsenkörper, wenigstens einen Einspritzanschluss, der an dem vorderen Ende des Düsenkörpers ausgebildet ist, und ein Nadelventil aufweist, das angepasst ist, um in dem Düsenkörper angehoben zu werden, und wenn das Nadelventil angehoben ist, ein ringförmiger Spalt zwischen dem Nadelventil und der inneren Fläche des Düsenkörpers ausgebildet ist, und
wobei der untere Lastbetriebsbereich dem Betriebsbereich entspricht, in dem die Piloteinspritzung und die Haupteinspritzung durch ein Anheben des Nadelventils zu solch einem Grad ausgeführt sind, dass der Querschnittsbereich des ringförmigen Spalts, der durch ein Anheben des Nadelventils ausgebildet ist, kleiner als der Gesamtquerschnittsbereich des Einspritzanschlusses ist.

5. Steuergerät für eine Dieselbrennkraftmaschine nach Anspruch 3 oder 4, ferner mit einer Wirbelverhältnissteuereinrichtung zum Ändern des Wirbelverhältnisses des Einlassgases, das in die Brennkammer der Dieselbrennkraftmaschine strömt,
wobei die Wirbelverhältnissteuereinrichtung das Wirbelverhältnis in dem Fall, in dem der Maschinenbetriebszustand in dem unteren Lastbetriebsbereich ist, auf einen größeren Wert als in dem Fall steuert, in dem der Maschinenbetriebszustand in einem anderen als dem unteren Lastbetriebsbereich ist.

6. Steuergerät für eine Dieselbrennkraftmaschine nach einem der Ansprüche 3 bis 5,
wobei zwei Piloteinspritzungen vor der Haupteinspritzung in der Mehrfachpiloteinspritzungsbetriebsart ausgeführt sind und
wobei die Mehrfachpiloteinspritzungsbetriebsart eine nahe Mehrfachpiloteinspritzungsbetriebsart, in der die erste Piloteinspritzung spät und nahe der zweiten Piloteinspritzung ausgeführt ist, und eine weite Mehrfachpiloteinspritzungsbetriebsart aufweist, in der die erste Piloteinspritzung früh und weit entfernt von der zweiten Piloteinspritzung ausgeführt ist, und
wobei der Kraftstoff in der nahen Mehrfachpiloteinspritzungsbetriebsart in dem Fall eingespritzt wird, in dem der Maschinenbetriebszustand in dem unteren Lastbetriebsbereich ist.

7. Steuergerät für eine Dieselbrennkraftmaschine nach einem der Ansprüche 2 bis 6,
wobei der Kraftstoff in der Mehrfachpiloteinspritzungsbetriebsart in dem Fall eingespritzt wird, in dem der Maschinenbetriebszustand in einem Betriebsbereich ist, in dem die Last nicht höher als eine Last ist, die höher als die mittlere Referenzlast ist, während des kalten Zustands der Brennkraftmaschine.

8. Steuergerät für eine Dieselbrennkraftmaschine nach einem der Ansprüche 5 bis 7,
wobei jeder Zylinder mit zwei Einlassanschlüssen in Verbindung steht und die Wirbelverhältnissteuereinrichtung ein zu öffnendes und zu schließendes Wirbelsteuerventil aufweist, das in einem der Einlassanschlüsse angeordnet ist, und
wobei das Wirbelsteuerventil während des Startbetriebs der Maschine geöffnet ist.

## Revendications

1. Appareil de commande pour un moteur à combustion interne de type diesel, comprenant une soupape d'injection de carburant et un moyen d'alimentation en carburant pour apporter le carburant à la soupape d'injection de carburant sous une pression cible d'alimentation en carburant,
dans lequel la soupape d'injection de carburant est adaptée pour injecter le carburant selon un mode d'injection pilote simple comportant l'injection principale environ au point mort haut dans une course de compression et une injection pilote exécutée avant l'injection principale, et selon un mode d'injection pilote multiple comportant l'injection principale et une pluralité d'injections pilotes exécutées avant l'injection principale,
dans lequel la pression cible d'alimentation en carburant est réglée à une pression cible de référence d'alimentation en carburant lorsque le carburant est injecté selon le mode d'injection pilote simple,
**caractérisé en ce que**
la pression cible d'alimentation en carburant est réglée de sorte à être plus élevée que la pression de référence d'alimentation en carburant lorsque le carburant est injecté selon le mode d'injection pilote multiple.

2. Appareil de commande pour un moteur à combustion interne de type diesel selon la revendication 1,
dans lequel le carburant est injecté selon le mode d'injection pilote multiple dans le cas où l'état de fonctionnement du moteur se trouve dans une zone de fonctionnement à faible/moyen régime où le régime moteur n'est pas plus élevé qu'un régime de référence moyen.

3. Appareil de commande pour un moteur à combustion interne de type diesel selon la revendication 2,
dans lequel, dans le cas où l'état de fonctionnement du moteur se trouve dans la zone de fonctionnement à faible régime où le régime moteur n'est pas plus élevé que le faible régime de référence qui est plus faible que le régime de référence moyen, la pression cible d'alimentation en carburant est augmentée de la pression cible de référence d'alimentation en carburant avec une plus grande marge que dans le cas où l'état de fonctionnement du moteur se trouve dans la zone de fonctionnement à régime moyen où le régime moteur n'est pas plus élevé que le régime de référence moyen et plus élevé que le faible régime de référence.

4. Appareil de commande pour un moteur à combustion interne de type diesel selon la revendication 3,
dans lequel la soupape d'injection de carburant comporte un corps de gicleur, au moins un orifice d'injection formé à l'extrémité avant du corps de gicleur et une soupape à pointeau adaptée pour être soulevée dans le corps de gicleur, et lorsque la soupape à pointeau est soulevée, un espace annulaire est formé entre la soupape à pointeau et la surface interne du corps de gicleur, et
dans lequel la zone de fonctionnement à faible régime correspond à la zone de fonctionnement où l'injection pilote et l'injection principale sont effectuées en soulevant la soupape à pointeau à un degré tel que la superficie en coupe transversale de l'espace annulaire formé en soulevant la soupape à pointeau est plus petite que la superficie en coupe transversale totale des orifices d'injection.

5. Appareil de commande pour un moteur à combustion interne de type diesel selon la revendication 3 ou 4, comprenant en plus un moyen de commande du taux de tourbillonnement pour changer le taux de tourbillonnement du gaz d'admission qui circule dans la chambre de combustion du moteur à combustion interne de type diesel,
dans lequel le moyen de commande du taux de tourbillonnement commande le taux de tourbillonnement à une plus grande valeur dans le cas où l'état de fonctionnement du moteur se trouve dans la zone de fonctionnement à faible régime que dans le cas où l'état de fonctionnement du moteur se trouve dans une zone autre que la zone de fonctionnement à faible régime.

6. Appareil de commande pour un moteur à combustion interne de type diesel selon l'une quelconque des revendications 3 à 5,
dans lequel deux injections pilotes sont effectuées avant l'injection principale dans le mode d'injection pilote multiple, et dans lequel le mode d'injection pilote multiple comporte un mode d'injection pilote multiple proche où la première injection pilote est exécutée de manière tardive et proche de la deuxième injection pilote et un mode d'injection pilote multiple lointain où la première injection pilote est exécutée de manière précoce et lointaine par rapport à la deuxième injection pilote, et
dans lequel le carburant est injecté dans un mode d'injection pilote multiple proche dans le cas où l'état de fonctionnement du moteur se trouve dans la zone de fonctionnement à faible régime.

7. Appareil de commande pour un moteur à combustion interne de type diesel selon l'une quelconque des revendications 2 à 6,
dans lequel le carburant est injecté dans un mode d'injection pilote multiple dans le cas où l'état de fonctionnement du moteur se trouve dans une zone de fonctionnement où le régime n'est pas plus élevé qu'un régime qui est plus élevé que le régime de référence moyen durant l'état à froid du moteur à combustion interne.

8. Appareil de commande pour un moteur à combustion interne de type diesel selon l'une quelconque des revendications 5 à 7,
dans lequel chaque cylindre communique avec deux orifices d'admission, et le moyen de commande du taux de tourbillonnement comporte une soupape de commande de tourbillonnement pouvant être ouverte et fermée agencée dans l'un des orifices d'admission, et
dans lequel la soupape de commande de tourbillonnement est ouverte durant l'opération de démarrage du moteur.
